# EUROPÄISCHE PATENTSCHRIFT

(11) **EP 2 852 872 B1**
(45) Veröffentlichungstag und Bekanntmachung des Hinweises auf die Patenterteilung: **19.07.2017**
(21) Anmeldenummer: 13727542.6
(22) Anmeldetag: 22.05.2013
(51) Int. Cl.: G05G 5/03, G05G 1/44

(54) **FAHRPEDALEINHEIT FÜR KRAFTFAHRZEUGE**
ACCELERATOR PEDAL UNIT FOR MOTOR VEHICLES
ENSEMBLE PÉDALE D'ACCÉLÉRATION POUR VÉHICULES AUTOMOBILES

(30) Priorität: 22.05.2012 DE 102012208548; 04.09.2012 DE 102012215685; 21.05.2013 DE 102013209370
(43) Veröffentlichungstag der Anmeldung: 01.04.2015
(73) Patentinhaber: Conti Temic Microelectronic GmbH, 90411 Nürnberg (DE)
(72) Erfinder: HEYDENREICH, Johannes, 81371 München (DE); LEONE, Carmelo, 85354 Freising (DE); SILBERLEITNER, Norbert, R-550000 Sibiu (RO); SZASZ, Mihaly, R-547055 Bahnea (RO); ZELL, Andreas, 90411 Nürnberg (DE); OKUMOTO, Nobuaki, Tougane-City Chiba -Prefecture (JP)
(86) Internationale Anmeldenummer: PCT/EP2013/060481
(87) Internationale Veröffentlichungsnummer: WO 2013/174853

(56) Entgegenhaltungen:
- DE-A1-102004 025 829
- DE-A1-102007 000 218
- DE-A1-102011 075 603

## Beschreibung

Die vorliegende Erfindung betrifft eine Fahrpedaleinheit, wie bekannt aus DE 10 2011 075 603 A1 für Kraftfahrzeuge aufweisend ein Fahrpedal zum Steuern einer Antriebskraft eines Motors eines Kraftfahrzeugs, eine Rückstellfeder, wobei eine durch eine entsprechende Betätigungskraft herbeigeführte Lageänderung des Fahrpedals gegenüber seiner Ausgangslage entgegen einer Rückstellkraft der Rückstellfeder zu einer Erhöhung der Antriebskraft des Motors führt und bei nachlassender Betätigungskraft die Rückstellkraft der Rückstellfeder das Fahrpedal in Richtung seiner Ausgangslage zurückbefördert.

Bei modernen Kraftfahrzeugen besteht generell das Problem, dass der Fahrzeugführer mit vielen Informationen seines Kraftfahrzeugs versorgt wird. Diese Reizüberflutung des fahrzeugführers -durch akustische und optische Signale führt zu einer Ablenkung vom Verkehr. Infolgedessen neigt der Fahrzeugführer dazu, die Signale zu überhören oder zu ignorieren oder er kann sie nicht mehr der Ursache zuordnen. Eine Fahrpedaleinheit der eingangs genannten Gattung vermeidet alle Nachteile optischer und akustischer Systeme: Es ist eine geeignete Mensch-Maschinen-Schnittstelle für Längsdynamik-Funktionen (Abstandsinformation, Geschwindigkeitsbegrenzung und -regelung) sowie zur Anzeige von Gefahrenhinweisen.

Aus der DE 32 32 160 A1 ist daher eine Vorrichtung bekannt, bei der die Rückstellkraft des Fahrpedals veränderbar ist und dem Fahrzeugführer eine haptische Rückmeldung gibt. Die Rückstellkraft des Fahrpedals wird im Bereich des gesamten Pedalwegs in Abhängigkeit von Kenngrößen, die das Motordrehmoment und die Motordrehzahl wiedergeben, automatisch eingestellt. Bei der vorbekannten Vorrichtung ist ein hydraulisches Stellglied vorgesehen, das über eine Feder mit dem Fahrpedal verbunden ist. Derartige Stellglieder sind vergleichsweise aufwendig, da sie regelbar sein müssen.

Bisherige bekannte Direktantriebe haben ein sehr gutes haptisches Verhalten am Pedal, steile, scharfe Kraftkurven mit sehr schnellen Reaktionszeiten. Der Nachteil, bei statischem Betrieb, erwärmt sich das System durch die angeforderte Dauerkraft sehr schnell, was zu einer starken Einschränkung der Verfügbarkeit führt. Alternativen sind hochübersetzte Getriebeansteuerungen, haben aber haptische, akustische Nachteile.

Aufgabe ist es die Verlustleistung eines elektromechanischen Stellers für eine Fahrpedaleinheit der eingangs genannten Gattung so zu reduzieren, dass eine größte mögliche thermische Verfügbarkeit entsteht.

Die Aufgabe wird gelöst gemäß einer Fahrpedaleinheit der eingangs genannten Art, die eine Reibvorrichtung zum Erzeugen einer als zusätzlich zur Rückstellkraft wirkenden Reibungskraft aufweist.

Die Aufgabe wird ferner gelöst gemäß eines zweiten Aspektes der Erfindung mit einer Fahrpedaleinheit der eingangs genannten Art, die einen elektromechanischen Hauptaktuator zum Erzeugen einer mittels einer Steuereinheit variabel streuerbaren zusätzlichen Rückstellkraft, und eine Reibvorrichtung zum Erzeugen einer als zusätzlich zur Rückstellkraft wirkenden Reibungskraft aufweist.

Der Erfindung liegt der Grundgedanke zugrunde mittels einer zusätzlichen Reibvorrichtung, die ohne ständige Stromzufuhr betrieben werden kann, die Rückstellkraft aufzubringen oder den Hauptaktuator zu unterstützen und auf diese Weise' die Stromlast des Hauptaktuator zu reduzieren. Das System kann unter gewissen definierten Bedingungen - durch Einbringung einer mechanischen Vorrichtung bzw. der Reibvorrichtung - mit stark reduziertem Strom die Kraft halten. Die thermische Belastung des Hauptaktuators durch die Stromlast wird auf diese Weise wesentlich reduziert. Außerdem verringert sich auch der Stromverbrauch der Fahrpedaleinheit.

Die Reibvorrichtung ist in den Betrieb der Fahrpedaleinheit zu- und abschaltbar. Die Reibvorrichtung ist derart ausgebildet, dass es unter vorbestimmten bzw. definierten Bedingungen in den Kraftfluss des Fahrpedals eingreift bzw. aus diesem kraftlos ausgenommen wird. Damit bleibt die Fahrpedaleinheit weiterhin betreibbar, auch wenn die Reibvorrichtung ausfällt.

Bei der Reibungskraft handelt es sich um eine gewünschte und definierte Reibungskraft, die über die vorgesehenen Reibungsflächen erzeugt werden. Damit sind solche ungewünschten Reibungskräfte hiervon nicht erfasst, die in mechanischen Aufbauten unweigerlich auftreten. Die Reibvorrichtung ist vorteilhafterweise so ausgelegt bzw. konstruiert, dass ein großer Anteil der Reibungskraft in die gleiche Richtung wie die Rückstellkraft des Hauptaktuators wirkt. Bevorzugterweise wirkt die gesamte Reibungskraft in die Richtung der Rückstellkraft des Hauptaktuators.

In einer kostengünstigen Ausführungsform kann die erfindungsgemäße Fahrpedaleinheit ohne Hauptaktuator betrieben werden. Um ein besseres haptisches Gefühl am Fahrpedal zu erzeugen wird der Einsatz eines Hauptaktuators bevorzugt, wie es im zweiten Aspekt der Erfindung genannt ist.

Die erfindungsgemäße Fahrpedaleinheit wird dadurch in vorteilhafte Weise weitergebildet, dass die Reibvorrichtung einen konusförmigen Eingriffskörper und einen Aufnahmekörper mit einer konusförmigen Ausnehmung zum Aufnehmen des Eingriffskörpers aufweist. Mittels des Eingriffskörpers und des Aufnahmekörpers ist eine besonders einfache mechanische Umsetzung der Zu-und Abschaltbarkeit der Reibvorrichtung umsetzbar. Dank der Form des Eingriffskörpers als Konus sowie die dazu korrespondierende konusförmige Ausnehmung des Aufnahmekörpers baut sich die Kontaktkraft zwischen diesen beiden Teilen allmählich auf, sobald der Eingriffskörper in die Ausnehmung des Aufnahmekörpers verschoben wird. Diese Kontakt Kraft kann dazu genutzt werden, um die Reibungskraft aufzubauen.

Die erfindungsgemäße Fahrpedaleinheit wird dadurch in vorteilhafte Weise weitergebildet, dass der Eingriffskörper und der Aufnahmekörper koaxial zueinander ausgerichtet sind.

Die erfindungsgemäße Fahrpedaleinheit wird dadurch in vor-teilhafte Weise weitergebildet, dass der Eingriffskörper und / oder der Aufnahmekörper eine Reibfläche aufweisen, wobei die Reibkraft über die Reibfläche erzeugbar ist, sobald der Eingriffskörper in die Ausnehmung des Aufnahmekörpers in Eingriff kommt.

Die erfindungsgemäße Fahrpedaleinheit wird dadurch in vorteilhafte Weise weitergebildet, dass der Eingriffskörper mehrteilig ausgebildet ist.

Besonders bevorzugt ist eine Ausführungsform der erfindungsgemäßen Fahrpedaleinheit, die einen bistabilen Hilfsaktuator zum Verschieben des Aufnahmekörpers oder des Eingriffskörpers in Richtung seiner Längsachse aufweist. Mittels des bistabilen Hilfsaktuators kann der Aufnahmekörper oder der Eingriffskörper stromlos in einer Position gehalten werden und zugleich bei Bedarf in die gewünschten Positionen verschoben werden. Der bistabile Hilfsaktuator zeichnet sich dadurch aus, dass es ein mit dem Hilfsaktuator gekoppeltes Teil in mehrere Positionen mittels Stromzufuhr verschieben kann. Das Halten des verschiebbaren Teils in einer Position erfolgt stromlos, beispielsweise durch einen Permanentmagneten.

Die erfindungsgemäße Fahrpedaleinheit wird dadurch in vorteilhafte Weise weitergebildet, dass der Aufnahmekörper mittels des Hilfsaktuators zwischen zwei Positionen verschiebbar und haltbar ist.

Die erfindungsgemäße Fahrpedaleinheit wird dadurch in vorteilhafte Weise weitergebildet, dass der Haupt- oder Hilfsaktuator ein Stößelelement aufweist, wobei der Eingriffskörper mit einem der Stößelelemente mittels des Aufnahmekörpers kraftschlüssig koppelbar ist.

Die erfindungsgemäße Fahrpedaleinheit wird dadurch in besonders vorteilhafte Weise weitergebildet, dass der Hilfsaktuator mittels eines Federelements in Richtung seiner Längsachse gefedert gelagert ist. Die Ausführungsform ermöglicht einen besonders einfachen mechanischen Aufbau der Fahrpedaleinheit und ist kostengünstig umsetzbar.

Die erfindungsgemäße Fahrpedaleinheit wird dadurch in besonders vorteilhafte Weise weitergebildet, dass der Haupt- und Hilfsaktuator jeweils ein Stößelelement aufweisen, wobei das Stößelelement -des Hilfsaktuator innerhalb des Stößelelements des Hauptaktuators angeordnet ist und die' Stößelelemente miteinander gekoppelt sind.

Die erfindungsgemäße Fahrpedaleinheit wird dadurch in vorteilhafte Weise weitergebildet, dass die Stößelelemente formschlüssig miteinander gekoppelt sind.

Die erfindungsgemäße Fahrpedaleinheit wird dadurch in vorteilhafte Weise weitergebildet, dass das Stößelelement des Hilfsaktuators kraftschlüssig mit dem Eingriffskörper gekoppelt ist.

Die erfindungsgemäße Fahrpedaleinheit wird dadurch in vorteilhafte Weise weitergebildet, dass das Stößelelement des Hilfsaktuators entlang seiner Längsachse zum Hauptaktuator gefedert gelagert ist.

Die erfindungsgemäße Fahrpedaleinheit wird dadurch in vorteilhafte Weise weitergebildet, dass der Haupt- und Hilfsaktuator innerhalb eines Gehäuses angeordnet sind.

Die Aufgabe wird ferner gelöst durch einen dritten Aspekt der Erfindung umfassend ein Fahrzeug mit einer Fahrpedaleinheit nach einem der vorgenannten Ausführungsformen.

Weitere bevorzugte Ausführungsformen ergeben sich aus der nachfolgenden Beschreibung eines Ausführungsbeispiels an Hand von Figuren.

Es zeigen
- Fig. 1: eine erfindungsgemäße Fahrpedaleinheit in einer seitlichen Teilschnittansicht,
- Fig. 2: eine Schnittansicht auf den Aktuator der erfindungsgemäßen Fahrpedaleinheit von der Seite gemäß eines ersten Ausführungsbeispiels,
- Fig. 3: eine perspektivische Ansicht auf Teile des Aktuators des ersten Ausführungsbeispiels,
- Fig. 4: eine Schnittansicht auf den Aktuator der erfindungsgemäßen Fahrpedaleinheit von der Seite gemäß eines zweiten Ausführungsbeispiels,
- Fig. 5: eine Schnittansicht auf den Aktuator der erfindungsgemäßen Fahrpedaleinheit von der Seite gemäß eines dritten Ausführungsbeispiels,
- Fig. 6: eine Seitenschnittansicht der Reibvorrichtung gemäß eines vierten Ausführungsbeispiels,
- Fig. 7: eine Schnittansicht auf den Aktuator der erfindungsgemäßen Fahrpedaleinheit von der Seite gemäß eines fünften Ausführungsbeispiels,
- Fig. 8: eine detaillierte Schnittansicht auf den Aktuator der erfindungsgemäßen Fahrpedaleinheit gemäß des fünften Ausführungsbeispiels, und
- Fig. 9: eine Seitenansicht auf einen Teilbereich der erfindungsgemäßen Fahrpedaleinheit von der Seite gemäß eines sechsten Ausführungsbeispiels.

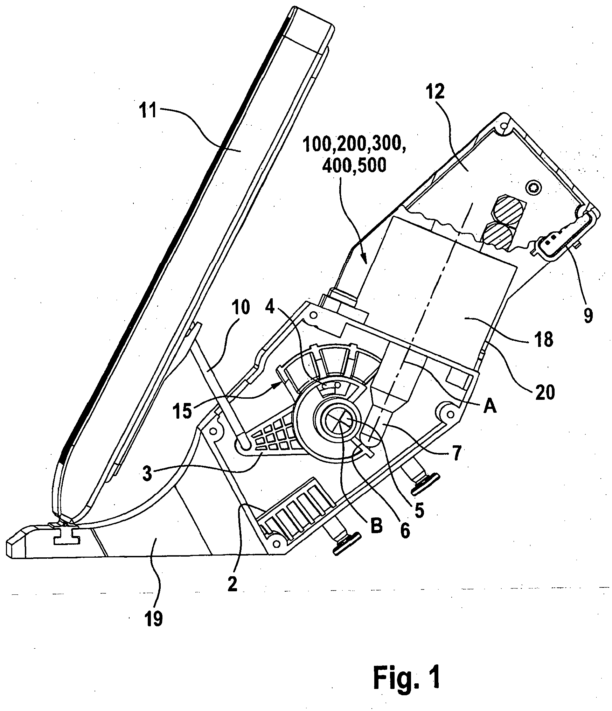

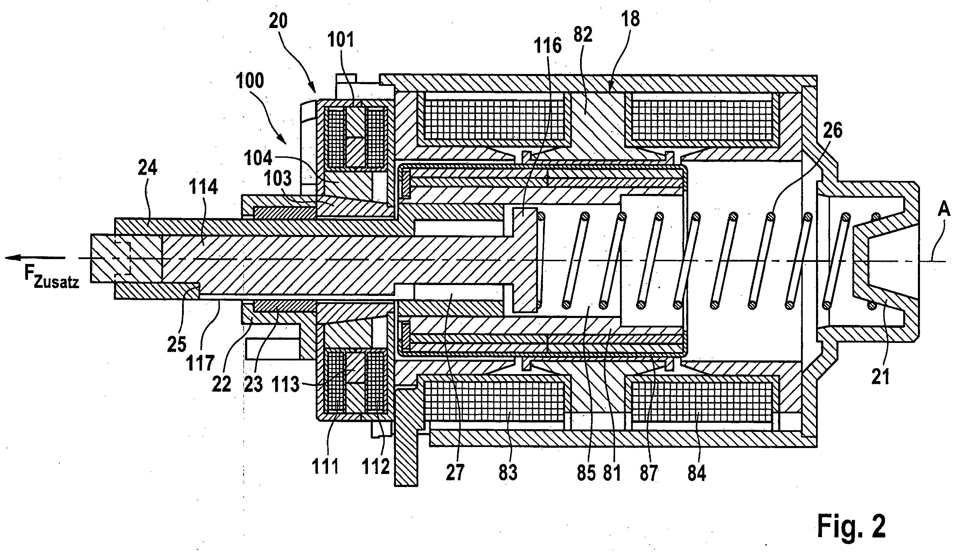

Der Ausgangszustand ist in Figur 1 dargestellt. Fig. 1 zeigt eine Fahrpedaleinheit 1 eines Kraftfahrzeugs aufweisend ein Fahrpedal 11 zum Steuern einer Antriebskraft eines Motors eines Kraftfahrzeugs. Eine durch eine entsprechende Betätigungskraft herbeigeführte Lageänderung des Fahrpedals 11 gegenüber seiner Ausgangslage entgegen einer Rückstellkraft einer hier nicht gezeigten Rückstellfeder führt zu einer Erhöhung der Antriebskraft des Motors. Dabei ist es unerheblich, ob der Antriebsmotor des Kraftfahrzeugs durch einen Verbrennungsmotor oder einen bzw. mehrere Elektromotoren oder durch eine Kombination der genannten Motoren realisiert wird. Bei nachlassender Betätigungskraft fördert die Rückstellkraft der Rückstellfeder das Fahrpedal 11 in Richtung seiner Ausgangslage zurück. Ein elektromechanischer Hauptaktuator 18 erzeugt eine mittels einer Steuereinheit 12 variabel steuerbare zusätzliche Rückstellkraft. Ferner weist die Fahrpedaleinheit 1 eine Reibvorrichtung 100, 200, 300, 400, 500, 600 (in den Figuren 2 bis 9 gezeigt) zum Erzeugen einer als zusätzlich zur Rückstellkraft wirkenden Reibungskraft Fₛ auf. Bei der in Fig. 1 dargestellten Fahrpedaleinheit handelt es sich um eine sogenanntes stehende Fahrpedaleinheit: die Pedalplatte 11 ist verschwenkbar in einer Abstützvorrichtung 19 gelagert, die in der Regel im Fußraum eines Kraftfahrzeugs auf dem Boden montiert wird. Die Erfindung ist dabei nicht auf diese Typen von Fahrpedalen beschränkt.

Nachfolgend wird die allgemeine Funktionsweise der Fahrpedaleinheit näher beschrieben.

Wird die Pedalplatte 11 niedergedrückt, dreht sie sich um ihre Drehachse. Die Pedalplatte 11 betätigt ein Übertragungselement 10, das wiederum mit einer nockenartigen Kurvenscheibe 3 verbunden ist. Durch die Kraftübertragung von der Pedalplatte 11 über das Übertragungselement 10 auf die Kurvenscheibe 3 wird diese um eine Achse B gedreht. Ein elektromechanischer Aktuator, der im vorliegenden Ausführungsbeispiel als Hubmagnet 18 ausgebildet ist, greift ebenfalls an der nockenartigen Kurvenscheibe 3 an: das Stößelelement bzw. der Magnetstößel 7 des Hubmagneten 18 liegt auf einer Anlagefläche 6 der Kurvenscheibe 3 an und ist entlang einer Achse A vom Hubmagneten 18 bewegbar.

Da der Magnetstößel 7 nur auf der Anlagefläche 6 anliegt kann der Hubmagnet 18 dabei nur eine Kraft in Richtung der Rückstellung der Pedalplatte 11 erzeugen. Eine stärkere Betätigung der Pedalplatte 11 als vom Fahrzeugführer mittels seiner Fußkraft eingestellt ist, kann der Hubmagnet 18 nicht erzeugen. Er wirkt also ausschließlich in Rückstellrichtung mit der zusätzlichen Rückstellkraft F_{Zusatz}.

Bei der Betätigung der Pedalplatte 11 wird die Kurvenscheibe 3 gemeinsam mit einem Magneten 5 in eine Drehbewegung um die Achse B versetzt. Ein hier nicht dargestellter Sensor, der mit einer Steuereinheit verbunden ist, ermittelt die Position der Pedalplatte 11 mit Hilfe des Magneten 5, der sich gemeinsam mit Kurvenscheibe 3 bewegt.

Wenn eine zusätzliche Rückstellkraft F_{Zusatz} erzeugt werden soll sendet eine weitere Steuereinheit 12 ein elektrisches Signal zum Hubmagneten 18. Der Hubmagnet 18 ist ein nichtkommutierter Direktantrieb mit einem begrenzten Hub, der den Magnetstößel 7 und eine statische Spule zur Bereitstellung der Lorentz-Kraft aufweist. Der Hubmagnet 18 kann mit Hilfe elektrischer Signale der Steuereinheit 12 so angesteuert werden, dass die zusätzliche Rückstellkraft F_{Zusatz} als Vibration oder Kraftimpuls an der Pedalplatte 11 für den Fahrzeugführer spürbar ist. Abhängig von den eben genannten zahlreichen Funktionen der Kraftform der zusätzlichen Rückstellkraft F_{Zusatz} kann auch die Größe der zusätzlichen Rückstellkraft F_{Zusatz} eingestellt werden oder der maximale Hub der Pedalplatte 11 begrenzt werden.

Wie es aus der Fig. 1 ersichtlich ist, ist der maximale Hub der Pedalplatte 11 erreicht, wenn die Kurvenscheibe 3 an einem Anschlag 2 anliegt. Bereits vor diesem maximal möglichen Hub kann der Hub der Pedalplatte 11 durch eine entsprechend große Rückstellkraft F_{Zusatz} des Hubmagneten 18 begrenzt werden. Der Fahrzeugführer spürt dann eine Kraftschwelle an der Pedalplatte 11, die nur mit größerem Kraftaufwand übertreten werden kann. Auf diese Weise wird der maximal mögliche Hub der Pedalplatte 11 begrenzt. Diese Funktion kann dazu dienen, den Fahrzeugführer zu einer energiesparenden Fahrweise anzuleiten.

Mittels der zusätzlichen Rückstellkraft F_{Zusatz} erhält der Fahrzeugführer eine haptische Information. So kann beispielsweise zum ökonomischen und spritsparenden Betrieb des Kraftfahrzeugs angehalten werden, indem die zusätzliche Rückstellkraft F_{Zusatz} bei ineffizienter Motordrehzahl erhöht wird und damit das Pedalgefühl härter wird. Andererseits kann der maximale Hub der Pedalplatte 11 begrenzt werden. Andere haptische Informationen, die dem Fahrzeugführer übermittelt werden können sind außerdem die Übermittlung sicherheitskritischer Informationen wie ein unzureichender Abstand zum vorausfahrenden Fahrzeug.

Nachfolgend werden die Ausführungsbeispiele der Fahrpedaleinheit 1 mit unterschiedlichen Ausführungen der Reibvorrichtungen 100, 200, 300, 400, 500, 600 näher beschrieben.

**Figur 2** zeigt ein zweites Ausführungsbeispiel der erfindungsgemäßen Fahrpedaleinheit mit einer Reibvorrichtung 100. Dieses Ausführungsbeispiel ist im Vergleich zu dem zweiten und dritten Ausführungsbeispielen zwar kostenaufwendiger, ermöglicht jedoch eine besonders feinfühlige und variable Regelbarkeit des haptischen Feedbacks.

Innerhalb eines Gehäuses 20 sind der Hauptaktuator 18 und die Reibvorrichtung 100 mit einem bistabilen Hilfsaktuator 101 angeordnet.

Das Gehäuse 20 des Hauptaktuators ist im Wesentlichen zylindrisch geformt. Der Hauptaktuator 18 und Hilfsaktuator 101 der Reibvorrichtung 100 sind zwischen zwei Stirnseiten des Gehäuses unmittelbar benachbart zueinander angeordnet. An einer hinteren Stirnseite ist ein Anschlag 21 für ein Federelement 126 vorgesehen. An einer vorderen Stirnseite ist ein Abschnitt 22 zum Aufnehmen eines Lagers 23 zum Lagern des ersten und zweiten Stößelelement 24, 114 ausgebildet. In Das erste Stößelelement 24 in den nachfolgenden Beispielen ersetzt den Magnetstößel 7 aus Figur 1.

Der Hauptaktuator 18 ist als Hubmagnet ausgebildet und weist einen beweglichen Kern 81 mit einem Permanentmagnetensystem 87 und einen Führungszylinder 82 auf, in denen, je nach Ausführung, eine oder mehrere Spulen 83, 84 untergebracht sind. Auch andere elektrische lineare Direktantriebe können als Hauptaktuator 18 verwendet werden.

Der Haupt- und Hilfsaktuator 18, 101 weisen jeweils ein Stößelelement 24, 114 auf, wobei das zweite Stößelelement 114 des Hilfsaktuators 101 innerhalb des ersten Stößelelements 24 des Hauptaktuators 18 angeordnet ist und die Stößelelemente 24, 114 miteinander gekoppelt sind. Vorzugsweise sind die Stößelelemente 24, 114 formschlüssig miteinander verbunden. Der Kern 81 weist einen Durchgang 185 auf, in der die Stößelelemente 24, 114 abschnittsweise angeordnet sind.

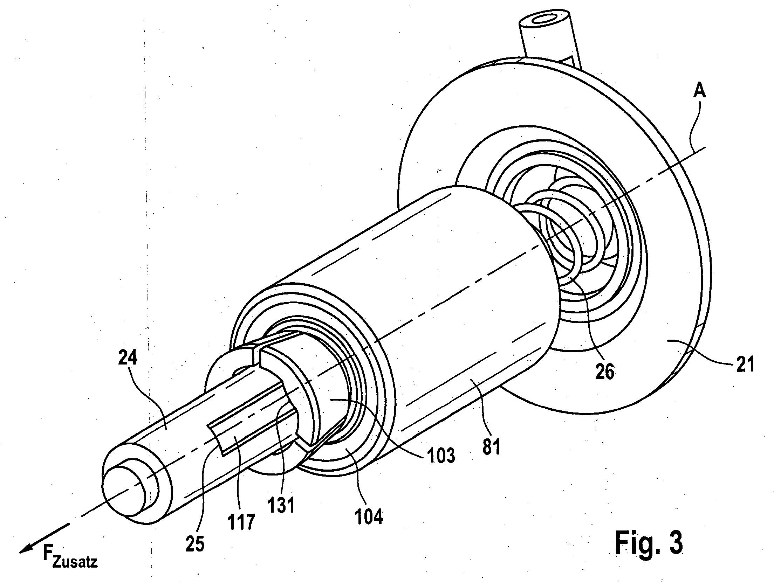

Das erste Stößelelement 24 ist mit dem Kern 81 gekoppelt und wird durch die Bewegung des Kerns 81 in Richtung der Achse A mit bewegt. Das erste Stößelelement 24 weist einen Anschlag 25 bzw. mehrere Anschlagsflächen (s. Figur 3) auf, worüber es mit dem zweiten Stößelelement 114 in Richtung der Rückstellkraft F_{Zusatz} formschlüssig gekoppelt ist. Wie in Figur 3 dargestellt, weist das zweite Stößelelement 114 hierzu mehrere passfederartige Vorsprünge 117 auf, die in die dazu korrespondierenden Ausnehmungen 27 in der Wand des ersten Stößelelements 24 reinragen. Die Ausnehmungen 27 sind derart gestaltet, dass das zweite Stößelelement 114 in der zur Rückstellkraft F_{Zusatz} entgegengesetzten Richtung in axialer Richtung entlang der Achse A frei beweglich ist. Lediglich ein an einer Anliegefläche 116 des zweiten Stößelelements 114 anliegende Federelement 26 drückt das zweite Stößelelement 114 in Richtung der Rückstellkraft F_{Zusatz} und dadurch das zweite Stößelelement 114 an den Anschlag 25 am ersten Stößelelement 24.

In einem Zustand, bei der die Reibvorrichtung 100 abgeschaltet bzw. deaktiviert ist, wirkt der Hauptaktuator 18 folgendermaßen, um die Rückstellkraft F_{Zusatz} auf das Fahrpedal 11 auszuüben.

Um die Rückstellkraft F_{Zusatz} zu erzeugen, werden die Spulen 183, 184 mit Strom beaufschlagt. Dies führt dazu, dass der Kern 181 in Richtung der Rückstellkraft F_{Zusatz} bewegt wird und damit auch das erste Stößelelement 24. Das erste Stößelelement 24 drückt dann gegen die Anlagefläche 6 der Kurvenscheibe 3, so dass die Rückstellkraft F_{Zusatz} am Fahrpedal 11 wirkt. Das zweite Stößelelement 114 folgt dem ersten Stößelelement 24 in der axialen Verschiebung entlang der Achse A aufgrund der von dem Federelement 26 ausgeübten Federkraft. Die Federkraft wirkt dabei zusätzlich zu der Rückstellkraft F_{Zusatz}.

In dem Fall, dass die von dem Fahrzeugführer ausgeübte Betätigungskraft auf das Fahrpedal 11 größer ist als die Rückstellkraft F_{Zusatz}, bewegt sich das erste Stößelelement 114 in die zur Rückstellkraft F_{Zusatz} entgegengesetzte Richtung. Dann kommt es zu einem Kontakt zwischen dem ersten und zweiten Stößelelement 24, 114 an dem Anschlag 25, so dass das zweite Stößelelement 114 mit dem ersten Stößelelement 24 mitgeführt wird. Auch in diesem Fall wirkt die Federkraft des Federelements 26 am Fahrpedal unabhängig davon, ob der Hauptaktuator 18 bestromt wird. Zusätzlich zur Federkraft kann durch die Zuschaltung bzw. Aktivierung der Reibvorrichtung eine zusätzlich zur Rückstellkraft wirkende Reibkraft erzeugt werden.

Die Reibvorrichtung 100 weist den bistabilen Hilfsaktuator 101 zum Verschieben eines Aufnahmekörpers 104 in Richtung seiner Längsachse auf, die mit der Längsachse A des Hauptaktuators 18 zusammenfällt. Der Hilfsaktuator 101 weist zwei bestrombare Spulen 111, 112 auf. Denkbar ist jedoch auch ein bistabiler Hilfsaktuator mit einer Spule. Mittels Bestromung eines der Spulen 111, 112 ist der Aufnahmekörper 102 entlang der Achse A verschiebbar. Zwischen den Spulen 111, 112 befindet sich ein Permanentmagnet 113 zum Halten des Aufnahmekörpers in einer vorbestimmten Position sobald die Stromzufuhr abgeschaltet wird. In der in Figur 2 gezeigten Position des Aufnahmekörpers 104 befindet sich die Reibvorrichtung 100 im zugeschalteten Zustand.

Zum Erzeugen der Reibkraft weist die Reibvorrichtung 100 einen konusförmigen Eingriffskörper 103 und den Aufnahmekörper 102 mit einer konusförmigen Ausnehmung 140 zum Aufnehmen des Eingriffskörpers 103 auf. Der Eingriffskörper 103 und / oder der Aufnahmekörper weisen eine Reibfläche 131 auf, wobei die Reibkraft über die Reibfläche 131 erzeugbar ist, sobald der Eingriffskörper 103 in die Ausnehmung des Aufnahmekörpers 104 eindringt. In diesem Ausführungsbeispiel sind die Reibflächen 131 am Eingriffskörper 103 ausgebildet.

Die Reibflächen 131 sind, wie in Figur 3 zu sehen, als kleine wulstartige Vorsprünge 131 ausgebildet, die einen ausschließlichen Kontakt mit dem zweiten Stößelelement 114 ermöglichen. Auf diese Weise kann ein Kraftschluss zwischen dem Eingriffskörper 103 und dem ersten Stößelelement 124 wirksam verhindert werden, um eine Bremswirkung des Hauptaktuators 18 zu verhindern. Vorteilhafterweise ist der Eingriffskörper 103 mehrteilig ausgebildet.

Der Eingriffskörper 103 und der Aufnahmekörper 104 sind koaxial zueinander ausgerichtet, wobei in diesem Ausführungsbeispiel der Aufnahmekörper 104 axial verschiebbar ist. Zum zuschalten der Reibvorrichtung 100 wird der Aufnahmekörper 104 mittels des Hilfsaktuators 101 axial verschoben, so dass sich der Durchmesser der konusförmigen Ausnehmung 140 verkleinert und dadurch ein Kontakt zwischen dem Aufnahmekörper 104 und dem Eingriffskörper 103 hergestellt wird. Durch den Kontakt wird eine Normalkraft erzeugt, welche den Eingriffskörper 103 auf das zweite Stößelelement 114 drückt. Dadurch wird an dem zweiten Stößelelement 114 einer Reibung erzeugt, die in Richtung der Rückstellkraft F_{Zusatz} wirkt.

Wird der Aufnahmekörper 104 mittels des Hilfsaktuators 101 in die zur Rückstellkraft entgegengesetzte Richtung verschoben, vergrößert sich der Durchmesser der Ausnehmung 140, so dass ein Kontakt zwischen dem Aufnahmekörper 104 und dem Eingriffskörper 103 nicht zustande kommt. In diesem Zustand spreizen sich die Teile des Eingriffskörpers 103 in radialer Richtung nach außen, so dass die Kontaktflächen an den Vorsprüngen 131 nicht mehr am zweiten Stößelelement 114 anliegen. Damit werden die drei Teile des Eingriffskörpers auch bei einer Verschiebung des zweiten Stößelelements 114 nicht in axialer Richtung mitgeführt. Es ist denkbar die Höhe der Reibungskraft zu variieren. Dies kann dadurch erfolgen, dass der Eingriffskörper 103 und / oder der Aufnahmekörper so ausgebildet wird, dass die Kontaktkraft bzw. Normalkraft zwischen dem Aufnahmekörper 103 und dem Eingriffskörper 104 je nach Position eines der beiden Teile unterschiedliche groß ist. Darüber hinaus ist es denkbar, den Eingriffskörper 103 und / oder Aufnahmekörper 104 derart auszubilden, dass eine Normalkraft auf den Eingriffskörper stets aufrechterhalten bleibt. Diese kann beispielsweise durch den Steigungswinkel der konusform festgelegt werden.

Der Vorteil dieser Ausführungsform umfasst u. a., dass dank der Federkraft und der Reibungskraft zwei zusätzliche Kraftquellen zur Erzeugung der Rückstellkraft vorhanden sind, die so zueinander kombiniert werden können, um eine Vielzahl von haptischen Rückmeldungen zu erzeugen. Es können unterschiedliche Kraftsignale erzeugt werden, die ein Gefühl des Tickens, Vibrieren oder dgl. am Fahrpedal erzeugen. Darüber hinaus ist mittels dieser Ausführungsform eine besonders gute stufenlose haptische Rückmeldung erzeugbar.

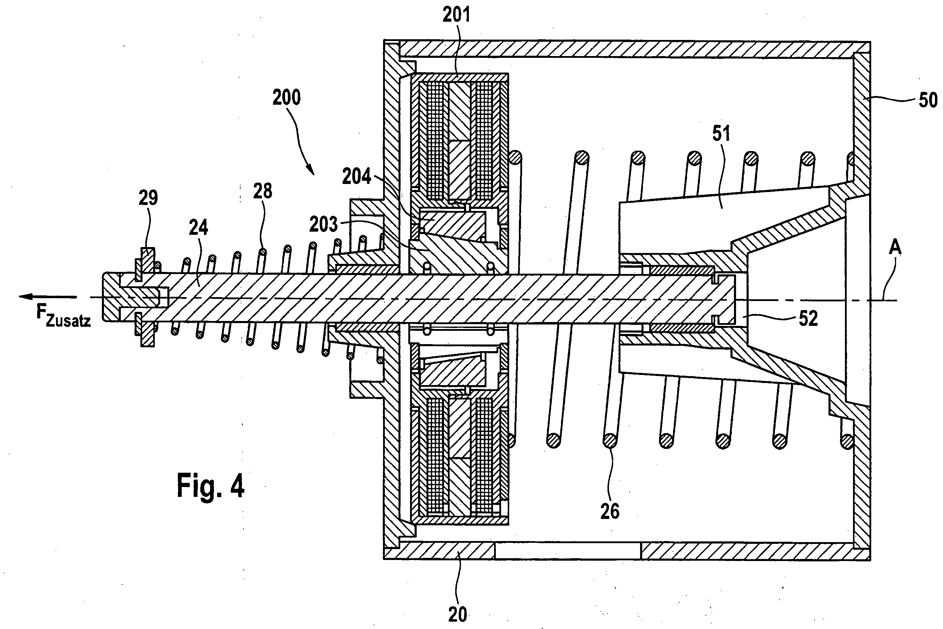

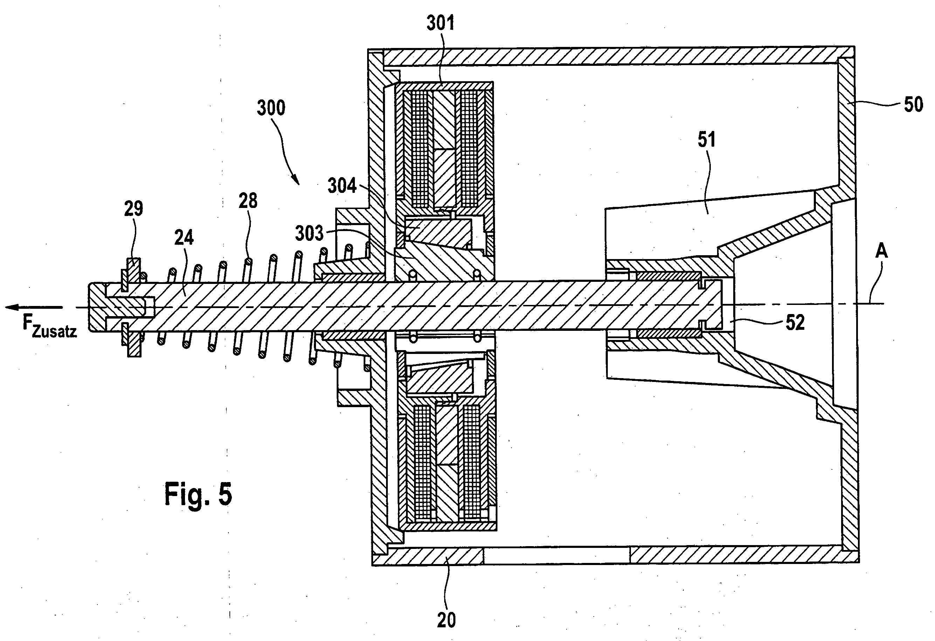

Die **Figuren 4** **und** **5** zeigen kostengünstigere und einfachere Ausführungsbeispiele der erfindungsgemäßen Fahrpedaleinheit.

In **Figur 4** ist ein Ausführungsbeispiel gezeigt, dass sich dadurch auszeichnet, dass eine Federkraft und / oder Reibkraft mittels der Reibvorrichtung zusätzlich zur Rückstellkraft zuschaltbar ist.

Die Reibvorrichtung 200 weist einen bistabilen Hilfsaktuator 201 auf. Der Hilfsaktuator 201 ist in diesem Fall identisch zu dem Hilfsaktuator 101 des ersten Ausführungsbeispiels. Der Hilfsaktuator 201 ist mittels eines ersten Federelements 26 in Richtung seiner Längsachse gefedert gelagert. Das Federelement 26 ist zwischen dem Hilfsaktuator 201 und einer Federhalteplatte 50 angeordnet.

Die Federleiterplatte 50 weist einen Zentriervorsprung 51, um das Federelement 26 in der vorgesehenen Lage zu halten. Der Zentriervorsprung 51 weist einen Durchgang 52 auf, durch die das Stößelelement 24 des Hauptaktuator 18 durchführbar ist. Auf diese Weise wird die axiale Führung des Stößelelements 24 sichergestellt.

Ein zweites Federelement 28 ist außerhalb des Gehäuses 20 zwischen der Außenfläche der Stirnseite des Gehäuses 20 und einem Anschlag 29 angeordnet und übt eine Rückstellkraft auf das Fahrpedal 11 aus, sobald das Stößelelement 24 in die zur Rückstellkraft entgegengesetzten Richtung verschoben wird. Zusätzlich dazu kann die Federkraft des ersten Federelements mittels der Reibvorrichtung 200 zugeschaltet werden.

Der Aufnahmekörper 204 ist mittels des Hilfsaktuators 201 in eine zugeschaltete Position verschiebbar, wie in Figur 4 dargestellt, um einen Kontakt zwischen dem Eingriffskörper 203 und dem Aufnahmekörper 204 herzustellen. Sobald das Stößelelement 214 in die zur Rückstellkraft entgegengesetzten Richtung verschoben wird, verschiebt sich der Hilfsaktuator 201 mit dem Stößelelement 24 aufgrund des Kraftschlusses zwischen dem Eingriffskörper 203 und dem Stößelelement 24. Die Federkraft des Federelements 26 wirkt dem entgegen und wirkt dabei als zusätzliche Rückstellkraft. Der Kraftschluss zwischen dem Eingriffskörper 203 und dem Stößelelement 24 kann derart ausgebildet werden, dass eine reibungsbehaftete Verschiebung des Stößelelements 24 relativ zum Eingriffskörper 203 möglich ist.

Alternativ ist es denkbar, das Stößelelement 24 mittels eines Hauptaktuators zusätzlich anzutreiben. Das Federelement 226 wäre in diesem Fall zwischen dem bistabilen Hilfsaktuator 201 und dem Hauptaktuator angeordnet. Der Hilfsaktuator 201 wäre weiterhin in die zur Rückstellkraft entgegengesetzte Richtung axial verschiebbar.

**Figur 5** zeigt ein Ausführungsbeispiel, dass sich zu dem zweiten Ausführungsbeispiel aus Figur 4 darin unterscheidet, dass der bistabile Hilfsaktuator 301 nicht mittels eines Federelementes gelagert ist. Stattdessen ist nur ein Federelement 28 zwischen der zweiten Stirnseite und dem Anschlag 329 vorgesehen. Eine zusätzliche Rückstellkraft ist mittels der Reibvorrichtung dadurch erzeugbar, dass der Hilfsaktuator form- order kraftschlüssig mit dem Gehäuse 20 verbunden ist. Der Hilfsaktuator kann beispielsweise an die Stirnseite des Gehäuses 20 angeschraubt werden. Denkbar ist auch die Verwendung eines Arretierbolzens, das in die Gehäusewand 20 eingreift. Des Weiteren ist es denkbar die radiale Außenfläche des Hilfsaktuators als Reibfläche einzusetzen.

Eine weitere Alternative zur Auslegung der Reibkraft der Reibvorrichtung besteht darin, die kraftschlüssige Verbindung zwischen dem Eingriffskörper 303 und dem Stößelelement 24 derart auszubilden, dass eine reibungsbehaftete axiale Bewegung des Stößelelements 23 möglich ist.

Die Rückstellkraft in diesem Ausführungsbeispiel wird daher zum einen über das Federelement 328 aufgebracht. Eine zusätzliche Rückstellkraft wird mittels der Reibungskraft der Reibvorrichtung 300 erzeugt, wenn der Eingriffskörper 303 in den Aufnahmekörper 304 in Eingriff kommt und dadurch eine kraftschlüssige Verbindung zwischen dem Eingriffskörper und dem Stößelelement 24 zustande kommt. In diesem Fall setzt sich die Rückstellkraft aus der Federkraft des Federelementes 328 und der Reibungskraft und / oder Haltekraft der Reibvorrichtung 300 zusammen.

Analog zu dem zweiten Ausführungsbeispiel kann auch das dritte Ausführungsbeispiel mittels eines Hauptaktuators ergänzt werden, dass eine zusätzliche Rückstellkraft über das Stößelelement 324 auf das Fahrpedal 11 überträgt.

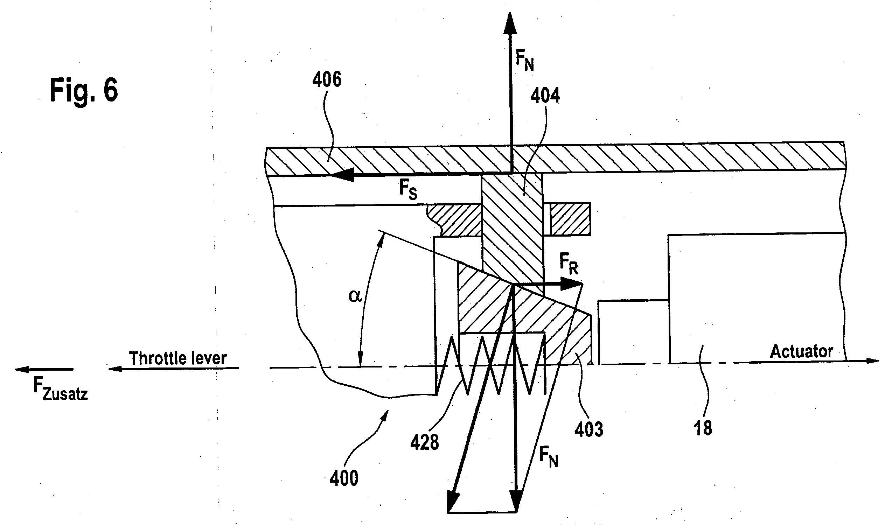

**Figur 6** zeigt ein weiteres viertes Ausführungsbeispiel, bei dem die Reibvorrichtung 400 einen konusförmigen Eingriffskörper 403, einen Aufnahmekörper 404 mit einer Ausnehmung zum Aufnehmen des Eingriffskörpers 403 aufweist, wobei der Eingriffs- und Aufnahmekörper 403, 404 innerhalb einer Führungshülse 406 geführt werden.

Der Aufnahmekörper 404 weist eine Reibungsfläche auf, die mit der Führungshülse 406 zusammenwirkt. Bei Betätigung des Fahrpedals 11 wird über den Anschlag 6 der Kurvenscheibe 3 eine Kraft auf den Eingriffskörper 403 übertragen. Ein Federelement 428 ist zwischen der Kurvenscheibe 3 und dem Eingriffskörper 403 zwischengeschaltet. Durch die Betätigungskraft und die Verschiebung der Kurvenscheibe 3 kommt der Eingriffskörper 403 in Eingriff mit dem Aufnahmekörper 404, durch den eine Reibung zwischen dem Aufnahmekörper 404 und der Führungshülse 406 erzeugt wird, die als zusätzliche Rückstellkraft F_{Zusatz} wirkt.

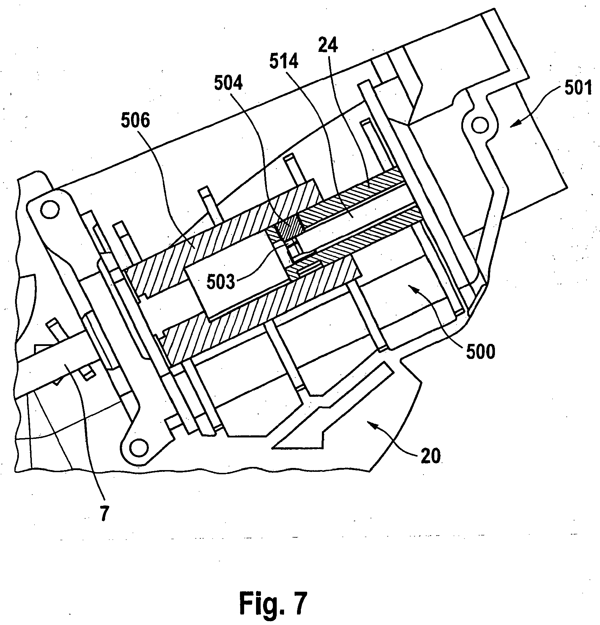

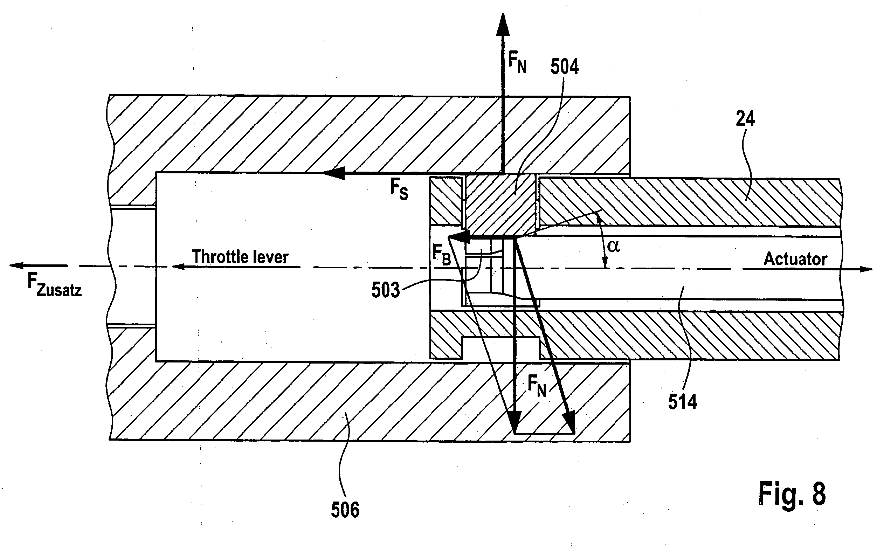

Die **Figuren 7** **und** **8** zeigen ein fünftes Ausführungsbeispiel mit einer Reibvorrichtung 500, die einen Aufnahmekörper 504, ein Stößelelement 514 mit einem konusförmigen Eingriffsabschnitt 503 und einen bistabile Hilfsaktuator 501 aufweist. Das zweite Stößelelement 514 des bistabilen Hilfsaktuators ist koaxial zu einem ersten Stößelelement 24 angeordnet. Das zweite Stößelelement 514 ist innerhalb einer Führungshülse 506 angeordnet. Es weist zudem eine Ausnehmung auf, durch die der Aufnahmekörper 504 durchsteckbar ist, um eine kraftschlüssige Verbindung zu der Führungshülse 504 aufzubauen. Der Aufnahmekörper 504 ist dadurch formschlüssig mit dem ersten Stößelelement 524 verbunden. Der konusförmige Eingriffsabschnitt 503 des bistabilen Hilfsaktuators kommt dann in Eingriff mit dem Aufnahmekörper 504, wenn der Hilfsaktuator das zweite Stößelelement 514 in die entsprechende Eingriffsposition, wie in Figur 8 gezeigt, verfährt. In dieser Position wird über die Normalkraft F_{N} zwischen dem Aufnahmekörper 504 und dem Eingriffskörper 503 eine Reibungskraft F_{S} an der Innenwand der Führungshülse 506 erzeugt, die als zusätzliche Rückstellkraft wirkt. Die Stößelelemente 24, 514 wirken mit dem Magnetstößel 7 zusammen, um einen Kraftfluss zum Fahrpedal 11 herzustellen. Vorzugsweise ist der Hilfsaktuator 501 in zur Rückstellkraft entgegengesetzt wirkenden Richtung mechanisch sperrbar.

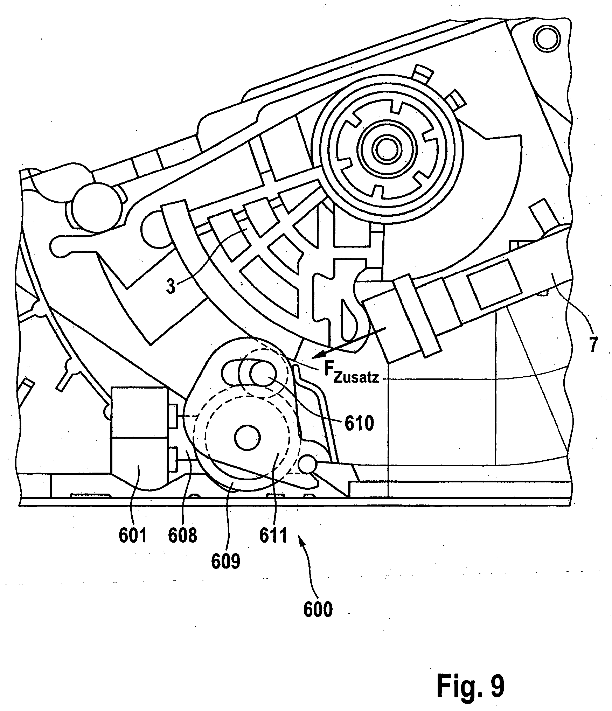

**Figur 9** zeigt ein sechstes Ausführungsbeispiel der erfindungsgemäßen Fahrpedaleinheit, bei der die Reibvorrichtung 600 als Getriebevorrichtung zum erzeugen einer zusätzlichen Hilfsrückstellkraft ausgebildet ist.

Die Getriebevorrichtung 600 ist mit der Kurvenscheibe 3 form- oder kraftschlüssig verbunden. Beispielsweise mittels einer Verzahnung. Vorzugsweise liegt das Reibelement 608 im eingefahrenen Zustand an einem Reibrad 609 an, wobei das Reibrad 608 mit der Kurvenscheibe 3 mechanisch gekoppelt ist. Alternativ ist es denkbar, dass das Reibrad 609 mittels eines Zahnrades 610 mit der Kurvenscheibe 3 gekoppelt ist.

Vorzugsweise ist das Reibelement 608 ein- und ausfahrbar. Gemäß diesem Ausführungsbeispiel ist das Reibelement 608 mittels eines bistabilen Hilfsäktuators 601 ein- und ausfahrbar. Alternativ ist das Reibelement 608 mittels eines Federelements einfahrbar.

Vorzugsweise ist das Reibelement 608 ausfahrbar, sobald das Fahrpedal 11 betätigt wird, und einfahrbar, sobald das Fahrpedal in die Ausgangslage zurückbefördert wird.

Alternativ dazu weist die Getriebevorrichtung 600 ein Schlitz-Lager 611 auf, mittels dessen die Getriebevorrichtung 600 mit der Kurvenscheibe 3 koppelbar ist. Vorzugsweise ist das Zahnrad 610 mit dem Schlitzlager 611 gekoppelt. Im betätigten Zustand des Fahrpedals 3 wirkt das Zahnrad 610 mit dem Schlitzlager 611 zusammen, um die Getriebevorrichtung so zu verschieben, dass ein Kontakt zwischen dem Reibelement 608 und dem Reibrad 609 zustande kommt. Das Zahnrad 610 und das Schlitzlager 611 kommen außer Eingriff, sobald das Fahrpedal in die Ausgangslage zurückbefördert wird, so dass die Getriebevorrichtung 600 derart verschoben wird, dass der Kontakt.zwischen dem Reibrad 609 und dem Reibelement aufgehoben wird.

## Patentansprüche

1. Fahrpedaleinheit (1) für Kraftfahrzeuge, aufweisend ein Fahrpedal (11) zum Steuern einer Antriebskraft eines Motors eines Kraftfahrzeugs,
eine Rückstellfeder, wobei eine durch eine entsprechende Betätigungskraft herbeigeführte Lageänderung des Fahrpedals (11) gegenüber seiner Ausgangslage entgegen einer Rückstellkraft der Rückstellfeder zu einer Erhöhung der Antriebskraft des Motors führt und bei nachlassender Betätigungskraft die Rückstellkraft der Rückstellfeder das Fahrpedal (11) in Richtung seiner Ausgangslage zurückbefördert,
a) **gekennzeichnet durch** eine Reibvorrichtung (100, 200, 300, 400, 500, 600) zum Erzeugen einer als zusätzlich zur Rückstellkraft wirkenden Reibungskraft,
b) wobei die Reibvorrichtung (100, 200, 300, 400, 500) einen Eingriffskörper (103, 203, 303, 403, 503) und einen Aufnahmekörper (104, 204, 304, 404, 504, 604) mit einer Ausnehmung zum Aufnehmen des Eingriffskörpers (103, 203, 303, 403, 503) aufweist,
c) der Eingriffskörper (103, 203, 303, 403, 503) und / oder der Aufnahmekörper (104, 204, 304, 404, 504) eine Reibfläche aufweisen, wobei die Reibkraft über die Reibfläche erzeugbar ist, sobald der Eingriffskörper (103, 203, 303, 403, 503) in die Ausnehmung des Aufnahmekörpers (104, 204, 304, 404, 504) in Eingriff kommt und
d) der Aufnahmekörper (104, 204, 304, 404, 504) oder der Eingriffskörper (103, 203, 303, 403, 503) in Richtung seiner Längsachse mittels eines bistabilen Hilfsaktuators (101, 201, 301) zwischen zwei Positionen verschiebbar und haltbar ist.

2. Fahrpedaleinheit (1) nach dem vorstehenden Anspruch, **dadurch gekennzeichnet, dass**
in einer Position die Reibvorrichtung zugeschaltet, also aktiv, und in der anderen Position abgeschaltet, also deaktiviert ist.

3. Fahrpedaleinheit (1) für Kraftfahrzeuge nach Anspruch 1 oder 2, **gekennzeichnet durch** einen elektromechanischen Hauptaktuator (18) zum Erzeugen einer mittels einer Steuereinheit (12) variabel steuerbaren zusätzlichen Rückstellkraft (F_{Zusatz}).

4. Fahrpedaleinheit (1) nach einem der vorstehenden Ansprüche, **dadurch gekennzeichnet, dass** der Eingriffskörper (103, 203, 303, 403, 503) konusförmig ist und der Aufnahmekörper (104, 204, 304, 404, 504, 604) eine entsprechende konusförmige Ausnehmung zum Aufnehmen des Eingriffskörpers (103, 203, 303, 403, 503) aufweist.

5. Fahrpedaleinheit (1) nach dem vorstehenden Anspruch, gekennzeichnet, dass der Eingriffskörper (103, 203, 303, 403, 503) und der Aufnahmekörper (104, 204, 304, 404, 504) koaxial zueinander ausgerichtet sind.

6. Fahrpedaleinheit (1) nach einem der Ansprüche 3 bis 5, **dadurch gekennzeichnet, dass** der Eingriffskörper (103, 203, 303, 403, 503) mehrteilig ausgebildet ist.

7. Fahrpedaleinheit (1) nach einem der vorstehenden Ansprüche, **dadurch gekennzeichnet, dass** der Haupt- oder Hilfsaktuator (18; 101, 201, 301) ein Stößelelement (24; 114, 514) aufweist, wobei der Eingriffskörper (103, 203, 303, 503) mit einem der Stößelelemente (24; 114, 514) mittels des Aufnahmekörpers (104, 204, 304, 504) kraftschlüssig koppelbar ist.

8. Fahrpedaleinheit (1) nach einem der vorstehenden Ansprüche, **dadurch gekennzeichnet, dass** der Hilfsaktuator (201) mittels eines Federelements (26) in Richtung seiner Längsachse (A) gefedert gelagert ist.

9. Fahrpedaleinheit (1) nach Anspruch 7 oder 8, **dadurch gekennzeichnet, dass** der Haupt- und Hilfsaktuator (18, 101) jeweils ein Stößelelement (24, 114) aufweisen, wobei das Stößelelement (114) des Hilfsaktuators (101) innerhalb des Stößelelements (24) des Hauptaktuators (18) angeordnet ist und die Stößelelemente (24, 114) miteinander gekoppelt sind.

10. Fahrpedaleinheit (1) nach dem vorstehenden Anspruch, **dadurch gekennzeichnet, dass** die Stößelelemente (24, 114) formschlüssig miteinander gekoppelt sind.

11. Fahrpedaleinheit (1) nach einem der Ansprüche 10 und 11, **dadurch gekennzeichnet, dass** das Stößelelement (114) des Hilfsäktuators (101) kraftschlüssig mit dem Eingriffskörper (103) gekoppelt ist.

12. Fahrpedaleinheit (1) nach einem der Ansprüche 9 bis 11, **dadurch gekennzeichnet, dass** das Stößelelement, (114) des Hilfsaktuators (101.) entlang seiner Längsachse (A) zum Hauptaktuator (18) gefedert gelagert ist.

13. Fahrpedaleinheit (1) nach einem der vorstehenden Ansprüche, **dadurch gekennzeichnet, dass** der Haupt- und Hilfsaktuator (18, 101, 201, 301) innerhalb eines Gehäuses (20) angeordnet sind.

14. Fahrpedaleinheit (1) nach einem der vorstehenden Ansprüche, **dadurch gekennzeichnet, dass** der bistabilen Hilfsaktuator zumindest eine Spule aufweist und durch Bestromung der Spule ein Verschieben des Aufnahmekörpers erfolgt sowie ein Permanentmagnet zum Halten des Aufnahmekörpers in dieser Position bei abgeschalteter Stromzufuhr zur Spule.

## Claims

1. An accelerator pedal unit (1) for motor vehicles, comprising an accelerator pedal (11) for controlling a propelling force of a motor of a motor vehicle,
a return spring, wherein a position change of the accelerator pedal (11) relative to a starting position thereof caused by a corresponding actuating force against a restoring force exerted by the return spring results in an increase of the propelling force of the motor, and the restoring force of the return spring returns the accelerator pedal (11) in the direction of the starting position thereof when the actuating force subsides,
a) **characterized by** a friction device (100, 200, 300, 400, 500, 600) for generating a friction force that acts in addition to the restoring force,
b) wherein the friction device (100, 200, 300, 400, 500) comprises an engaging body (103, 203, 303, 403, 503) and a receiving body (104, 204, 304, 404, 504, 604) that has a recess for receiving the engaging body (103, 203, 303, 403, 503),
c) the engaging body (103, 203, 303, 403, 503) and/or the receiving body (104, 204, 304, 404, 504) comprise(s) a friction surface that can generate the friction force as soon as the engaging body (103, 203, 303, 403, 503) engages into the recess of the receiving body (104, 204, 304, 404, 504), and
d) a bistable auxiliary actuator (101, 201, 301) can move and hold the receiving body (104, 204, 304, 404, 504) or the engaging body (103, 203, 303, 403, 503) between two positions in the direction of the longitudinal axis of the receiving body or the engaging body.

2. The accelerator pedal unit (1) according to the preceding claim, **characterized in that** the friction device is switched on, i.e. active, in one position, and switched off, i.e. deactivated, in another position.

3. The accelerator pedal unit (1) for motor vehicles according to Claim 1 or 2, **characterized by** an electromechanical main actuator (18) for generating an additional restoring force (F_{Zusatz}) that can be variably controlled by means of a control unit (12).

4. The accelerator pedal unit (1) according to any one of the preceding claims, **characterized in that** the engaging body (103, 203, 303, 403, 503) has a conical shape, and the receiving body (104, 204, 304, 404, 504, 604) has a corresponding conically shaped recess for receiving the engaging body (103, 203, 303, 403, 503).

5. The accelerator pedal unit (1) according to the preceding claim, **characterized in that** the engaging body (103, 203, 303, 403, 503) and the receiving body (104, 204, 304, 404, 504) are aligned coaxially with one another.

6. The accelerator pedal unit (1) according to any one of Claims 3 to 5, **characterized in that** the engaging body (103, 203, 303, 403, 503) is constructed of multiple parts.

7. The accelerator pedal unit (1) according to any one of the preceding claims, **characterized in that** the main actuator or the auxiliary actuator (18; 101, 201, 301) comprises a plunger element (24; 114, 514), wherein the engaging body (103, 203, 303, 503) can be non-positively coupled to one of the plunger elements (24; 114, 514) by means of the receiving body (104, 204, 304, 504).

8. The accelerator pedal unit (1) according to any one of the preceding claims, **characterized in that** the auxiliary actuator (201) is spring-mounted in the direction of its longitudinal axis (A) by means of a spring element (26).

9. The accelerator pedal unit (1) according to Claim 7 or 8, **characterized in that** the main actuator and the auxiliary actuator (18, 101) each respectively comprise a plunger element (24, 114), wherein the plunger element (114) of the auxiliary actuator (101) is arranged inside the plunger element (24) of the main actuator (18), and the plunger elements (24, 114) are coupled to one another.

10. The accelerator pedal unit (1) according to the preceding claim, **characterized in that** the plunger elements (24, 114) are positively coupled with one another.

11. The accelerator pedal unit (1) according to any one of Claims 10 and 11, **characterized in that** the plunger element (114) of the auxiliary actuator (101) is non-positively coupled with the engaging body (103).

12. The accelerator pedal unit (1) according to any one of Claims 9 to 11, **characterized in that** the plunger element (114) of the auxiliary actuator (101) is spring-mounted along its longitudinal axis (A) to the main actuator (18).

13. The accelerator pedal unit (1) according to any one of the preceding claims, **characterized in that** the main actuator and the auxiliary actuator (18, 101, 201, 301) are arranged inside a housing (20).

14. The accelerator pedal unit (1) according to any one of the preceding claims, **characterized in that** the bistable auxiliary actuator comprises at least one coil which is effective to move the receiving body when power is supplied to the coil, and a permanent magnet for holding the receiving body in this position when power to the coil is switched off.

## Revendications

1. Unité de pédale d'accélération (1) pour véhicule automobile, comprenant une pédale d'accélération (11) pour la commande de la force d'entraînement du moteur d'un véhicule automobile,
un ressort de rappel, un changement de position de la pédale d'accélération (11) par rapport à sa position initiale, dû à une force d'actionnement correspondante, contre une force de rappel du ressort de rappel entraînant une élévation de la force d'entraînement du moteur, et la force de rappel du ressort de rappel ramenant la pédale d'accélération (11) vers sa position initiale en cas de relâchement de la force d'actionnement,
a) **caractérisée par** un dispositif de friction (100, 200, 300, 400, 500, 600) destiné à générer une force de friction agissant en complément de la force de rappel,
b) le dispositif de friction (100, 200, 300, 400, 500) présentant un corps d'engagement (103, 203, 303, 403, 503) et un corps de réception (104, 204, 304, 404, 504, 604) avec une cavité pour la réception du corps d'engagement (103, 203, 303, 403, 503),
c) le corps d'engagement (103, 203, 303, 403, 503) et / ou le corps de réception (104, 204, 304, 404, 504) présentant une surface de friction, ladite force de friction pouvant être générée sur la surface de friction dès que le corps d'engagement (103, 203, 303, 403, 503) vient en prise dans la cavité du corps de réception (104, 204, 304, 404, 504) et
d) le corps de réception (104, 204, 304, 404, 504) ou le corps d'engagement (103, 203, 303, 403, 503) étant mobiles et fixables entre deux positions dans la direction de leur axe longitudinal au moyen d'un actionneur auxiliaire bistable (101, 201, 301).

2. Unité de pédale d'accélération (1) selon la revendication précédente, **caractérisée en ce que** le dispositif de friction est connecté, donc activé, dans une position, et déconnecté, donc désactivé, dans l'autre position.

3. Unité de pédale d'accélération (1) pour véhicule automobile selon la revendication 1 ou la revendication 2, **caractérisée par** un actionneur principal électromécanique (18) destiné à générer une force de rappel complémentaire (F_{Zusatz}) pouvant être commandée de manière variable au moyen d'une unité de commande (12).

4. Unité de pédale d'accélération (1) selon l'une des revendications précédentes, **caractérisée en ce que** le corps d'engagement (103, 203, 303, 403, 503) est en forme de cône et **en ce que** le corps de réception (104, 204, 304, 404, 504, 604) présente une cavité conique correspondante pour la réception du corps d'engagement (103, 203, 303, 403, 503).

5. Unité de pédale d'accélération (1) selon la revendication précédente, **caractérisée en ce que** le corps d'engagement (103, 203, 303, 403, 503) et le corps de réception (104, 204, 304, 404, 504) sont coaxiaux l'un par rapport à l'autre.

6. Unité de pédale d'accélération (1) selon l'une quelconque des revendications 3 à 5, **caractérisée en ce que** le corps d'engagement (103, 203, 303, 403, 503) est constitué de plusieurs parties.

7. Unité de pédale d'accélération (1) selon l'une quelconque des revendications précédentes, **caractérisée en ce que** l'actionneur principal ou l'actionneur auxiliaire (18 ; 101, 201, 301) comprennent un coulisseau (24 ; 114, 514), le corps d'engagement (103, 203, 303, 503) pouvant être accouplé par force à un des coulisseaux (24 ; 114, 514) au moyen du corps de réception (104, 204, 304, 504).

8. Unité de pédale d'accélération (1) selon l'une quelconque des revendications précédentes, **caractérisée en ce que** l'actionneur auxiliaire (201) est monté élastiquement dans la direction de son axe longitudinal (A) au moyen d'un élément de ressort (26).

9. Unité de pédale d'accélération (1) selon la revendication 7 ou la revendication 8, **caractérisée en ce que** l'actionneur principal et l'actionneur auxiliaire (18, 101) comprennent chacun un coulisseau (24, 114), le coulisseau (114) de l'actionneur auxiliaire (101) étant disposé à l'intérieur du coulisseau (24) de l'actionneur principal (18) et les coulisseaux (24, 114) étant accouplés l'un à l'autre.

10. Unité de pédale d'accélération (1) selon la revendication précédente, **caractérisée en ce que** les coulisseaux (24, 114) sont accouplés l'un à l'autre par engagement positif.

11. Unité de pédale d'accélération (1) selon la revendication 10 ou la revendication 11, **caractérisée en ce que** le coulisseau (114) de l'actionneur auxiliaire (101) est accouplé par force au corps d'engagement (103).

12. Unité de pédale d'accélération (1) selon l'une quelconque des revendications 9 à 11, **caractérisée en ce que** das coulisseau (114) de l'actionneur auxiliaire (101) est monté élastiquement le long de son axe longitudinal (A) par rapport à l'actionneur principal (18).

13. Unité de pédale d'accélération (1) selon l'une quelconque des revendications précédentes, **caractérisée en ce que** l'actionneur principal et l'actionneur auxiliaire (18, 101, 201, 301) sont disposés à l'intérieur d'un carter (20).

14. Unité de pédale d'accélération (1) selon l'une quelconque des revendications précédentes, **caractérisée en ce que** l'actionneur auxiliaire bistable comprend au moins une bobine, un déplacement du corps de réception étant obtenu par électrification de la bobine, ainsi qu'un aimant permanent pour le maintien du corps de réception dans cette position en cas de coupure de l'alimentation en courant vers la bobine.
